# NEUE EUROPÄISCHE PATENTSCHRIFT

(11) **EP 1 719 602 B2**
(45) Veröffentlichungstag und Bekanntmachung des Hinweises auf die Entscheidung über den Einspruch: **07.10.2015**
(45) Hinweis auf die Patenterteilung: 05.09.2007
(21) Anmeldenummer: 05009666.8
(22) Anmeldetag: 03.05.2005
(51) Int. Cl.: B29C 47/88, B29C 47/92

(54) **Verfahren und Vorrichtung zur Regelung des Dickenprofils bei der Blasfolienherstellung**
Method and apparatus for regulating the thickness profile of a blown film
Procédé et appareil pour régler le profil d'épaisseur d'un film tubulaire soufflé

(43) Veröffentlichungstag der Anmeldung: 08.11.2006
(73) Patentinhaber: Kdesign GmbH, 53639 Königswinter (DE)
(72) Erfinder: Zimmermann, Richard, 53127 Bonn (DE); Fähling, Gerd, 53773 Hennef (DE)
(74) Vertreter: Neumann, Ernst Dieter

(56) Entgegenhaltungen:
- EP-A- 0 555 093
- DE-A1- 2 254 687
- DE-A1- 2 658 518
- US-A- 4 606 879
- US-A- 5 281 375
- US-A- 5 354 190
- US-A1- 2004 113 331

## Beschreibung

Die Erfindung betrifft ein Verfahren zur Regelung des Dickenprofils bei der Herstellung von Schlauchfolien und bezieht sich außerdem auf eine Vorrichtung zur Durchführung dieses Verfahrens. Das Umfangsdickenprofil des aus der Ringdüse eines Blasfolienextruders austretenden Folienschlauchs weist umfangsverteilt dickere und dünnere Bereiche auf, die eine weitgehend ortsfeste Position haben. Diese ungleiche Dickenverteilung über dem Umfang wirkt sich beim Aufwickeln und Weiterverarbeiten des Folienschlauchs negativ aus.

Um die Abweichungen des Umfangsdickenprofils schon beim Herstellvorgang möglichst gering zu halten, wird die Wirkung ausgenutzt, daß beim Blasen des Folienschlauches, d.h. beim Aufweiten des Schlauchdurchmessers, wärmere Bereiche stärker und kühlere Bereiche weniger stark ausgereckt werden. Bei bekannten Vorrichtungen werden die Dickenunterschiede der Schlauchfolie über dem Umfang durch Variation der Kühlleistung oder durch Variation der Beheizung des Folienblaskopfes beeinflußt.

Bei höherer Kühlleistung in einem Umfangssektor kühlt die Schlauchfolie schneller, wird so weniger stark gedehnt und behält somit eine relativ größere Foliendicke. Bei geringerer Kühlleistung in einem Umfangssektor behält die Schlauchfolie eine höhere Temperatur, infolgedessen sie stärker dehnbar ist; somit wird die Foliendicke stärker vermindert. Die Foliendickenunterschiede über dem Umfang werden hierbei von einer Meßvorrichtung ermittelt und an eine Regeleinrichtung zur Variation der Kühl- oder Heizleistung übermittelt. Diese Meßeinrichtung ist in der Regel in Produktionsrichtung hinter einem sogenannten Einfrierbereich des Folienmaterials angeordnet, in dem sich das Folienmaterial nicht mehr plastisch dehnt.

Gesteigerte Ausstoßleistungen moderner Blasfolienextrusionsanlagen haben in den letzten Jahren zu ständig steigenden Anforderungen an die Leistungsfähigkeit von Dickenprofilregelsystemen geführt, da mit zunehmenden Ausstoßleistungen auch die Temperaturinhomogenitäten im Extrusionsteil sowie die Instabilitäten des Folienschlauches im Bereich der unmittelbaren Kühlgaszuführung zunehmen, was wiederum zu größeren Ungleichmäßigkeiten im Dickenprofil des Folienschlauches über dem Umfang führt.

Aus der DE 100 29 175 A1 ist eine Vorrichtung zur Regelung des Dickenprofils bei der Herstellung von Blasfolien zur Verwendung am Blaskopf eines Blasfolienextruders bekannt, die einen Hauptkühlring für einen über dem Umfang konstant gehaltenen Hauptkühlgasstrom sowie einen unterhalb desselben angeordneten Zusatzkühlring, mit dem Zusatzkühlgasströme sektorweise variabel steuerbar sind. Der Zusatzkühlring befindet sich hierbei unmittelbar oberhalb der Austrittsdüse des Blaskopfes. Oberhalb des Hauptkühlrings erfolgt die wesentliche Querschnitterweiterung des Blasfolienschlauches.

Unter der Bezeichnung MULTICOOL® D / OPTIFIL® -P3 wird vom Hersteller Windmöller & Hölscher KG ein Kühlringsystem für die Blasfolienherstellung angeboten, bei dem oberhalb der Blaskopfdüse zwei Kühlringe mit axialem Abstand zueinander angeordnet sind. Der unmittelbar auf dem Blaskopf angeordnete erste Kühlring ist mit einer Mehrzahl von Heizelementen versehen, die sektorweise einzeln gesteuert werden kann. Ähnlich wie bei einer Langhalsfahrweise erfolgt die wesentliche Querschnittsvergrößerung des Blasfolienschlauches oberhalb des zweiten oberen Kühlrings, der einen über dem Umfang gleichförmigen ungeregelten Kühlgasstrom ausbringt. Die Länge der Schlauchbildungszone vom Düsenaustritt bis zur Einfriergrenze am Kalibrierkorb vergrößert sich dabei erheblich, wobei im flaschenhalsförmigen Bereich zwischen erstem Kühlring und zweitem Kühlring nur eine geringe Materialverstreckung stattfindet.

Aus der US 4,606,879 ist eine Vorrichtung sowie ein Verfahren zur Regelung des Dickenprofils einer Schlauchfolie aus thermoplastischem Kunststoff bekannt.

Der vorliegenden Erfindung liegt die Aufgabe zugrunde, ein Verfahren und eine Vorrichtung der eingangs genannten Art bereitzustellen, mit denen verbesserte Ergebnisse bezüglich der Umfangsdickenverteilung der Schlauchfolie herbeiführbar sind. Die Lösung hierfür besteht in einem Verfahren zur Regelung des Dickenprofils einer Schlauchfolie aus thermoplastischem Kunststoff über deren Umfang bei der Herstellung von Schlauchfolien mittels eines Blasfolienextruders mit einem Folienblaskopf, wobei mittels einer Meßeinrichtung die Foliendicke der Schlauchfolie über dem Umfang gemessen und mittels einer Regeleinrichtung Kühlgasströme in Abhängigkeit von den gemessenen Foliendicken über dem Umfang sektorweise variabel gesteuert werden, wobei die Kühlgasströme von außen in Produktionsrichtung in zwei voneinander beabstandeten Ebenen zugeführt werden und die Kühlgasströme in den beiden Ebenen jeweils in ihren physikalischen Eigenschaften über dem Umfang sektorweise variabel gesteuert werden, und daß der axiale Abstand der Kühlgasströme voneinander an die Produktionsgeschwindigkeit der Schlauchfolie angepaßt wird.

Die Erfindung umfaßt dementsprechend weiterhin eine Vorrichtung zur Regelung des Dickenprofils einer Schlauchfolie aus thermoplastischem Kunststoff bei der Herstellung von Schlauchfolien zur Anordnung an einem Blasfolienextruder mit einem Folienblaskopf, umfassend eine Meßeinrichtung zur Messung des Dickenprofils der Schlauchfolie, die die Foliendicke der Schlauchfolie über dem Umfang mißt, und eine Regeleinrichtung, die Kühlgasströme in Abhängigkeit von den gemessenen Foliendicken über dem Umfang sektorweise variabel gesteuert, sowie zwei Kühlringe, die über dem Folienblaskopf des Blasfolienextruders in zwei voneinander beabstandeten Ebenen anzuordnen sind, wobei die beiden Kühlringe Mittel aufweisen, mit denen die Kühlgasströme sektorweise variabel steuerbar sind, und die Kühlringe zur Anpassung an verschiedene Produktionsgeschwindigkeiten mit Verstellmitteln relativ zueinander axial verstellbar sind.

Die erfindungsgemäße Lösung zeichnet sich in der Wirkung dadurch aus, daß über dem Umfang sektorweise variabel steuerbare Kühlgasströme über eine erhebliche Länge des Produktionsprozesses vom Austritt der Schlauchfolie aus dem Düsenblaskopf an bis nahe vor dem Eintritt der Schlauchfolie in einen Kalibrierkorb zugeführt werden können, ohne daß die Wirkung der Kühlgasströme durch Durchmischung oder Aufheizung nach kurzer Strecke in Produktionsrichtung verlorengeht. Die Ausbringungsgeschwindigkeit der Schlauchfolie kann durch den in Produktionsrichtung wesentlich gestreckten Wirkbereich der über dem Umfang variabel regelbaren Kühlgaszuführung deutlich erhöht werden, so daß bei zumindest gleichbleibender Qualität eine Produktionssteigerung möglich wird.

Hierbei ist es von besonderem Vorteil, daß die sektorweise variable Veränderung der Kühlgasströme gerade auch dort noch stattfindet, wo durch die abschließende starke Querschnittserweiterung des Folienschlauches eine deutliche Querverstreckung des Materials erfolgt, so daß sich die individuell unterschiedliche Kühlung über dem Umfang deutlich in einer Dickenverteilungskorrektur auswirken kann. Dies ist auch beim einfachen Kühlring mit Zusatzkühlring nach der DE 100 29 175 A1 gegeben, bei dem allerdings der axiale Wirkungsbereich sehr kurz ist, so daß die Kühlung bei hohen Ausstoßleistungen unzureichend werden kann. Dagegen erfüllt der weiterhin benannte Doppelkühlring dieses Kriterium nicht, da bei diesem vor der wesentlichen Querschnittsvergrößerung des Folienschlauches am zweiten Kühlring gleichmäßig stark über dem Umfang gekühlt wird, so daß noch bestehende Dickenprofilfehler geradezu eingefroren werden und bestehen bleiben.

Die Veränderung der physikalischen Steuerung der Kühlgasströme schließt die Möglichkeit der Variierung der Volumenströme ebenso wie der Temperatur des Kühlgases ein. Eine unabhängige Steuerung in den zwei Ebenen, die in bevorzugter Ausführung möglich ist, eröffnet die Möglichkeit, unterschiedliche Regelschemata zu verfolgen, um beispielsweise in einer ersten Ebene die Einflußnahme nach einem Grobschema und in einer zweiten Ebene die Einflußnahme nach einem Feinschema zu verwirklichen. Die Regelung des Dickenprofils wird üblicherweise auf konstante Dikke der Schlauchfolie erfolgen. Es ist jedoch auch möglich, bestimmte Dickenverteilungsstrukturen einzustellen und geregelt aufrechtzuerhalten. Die Kühlluftverteilung über dem Umfang kann an beiden Kühlringen bzw. in beiden Austrittsebenen übereinstimmend gesteuert werden, oder nach einem übereinstimmenden Steuerungsschema, jedoch gegeneinander winkelversetzt oder in den beiden Kühlringebenen völlig unterschiedlich, jedoch aufeinander abgestimmt erfolgen. Eine Dickenprofilmessung findet bevorzugt nur in einer Ebene hinter dem zweiten Kühlring statt.

Die Durchgangsöffnung der Kühlringe kann an die Durchmesserentwicklung des Folienschlauches angepaßt sein. Hierbei ist bevorzugt an den Kühlringen jeweils der untenliegende Eintrittsdurchmesser für den Folienschlauch kleiner als der obenliegende Austrittsdurchmesser für den Folienschlauch. Weiterhin hat bevorzugt ein durch Eintrittsdurchmesser und Austrittsdurchmesser des Kühlrings sowie deren axialen Abstand definierter Innenkonus, der diese beiden axial beabstandeten Durchmesser enthält, am unteren Kühlring einen kleineren Öffnungswinkel als am oberen Kühlring. Mit dieser Innengeometrie der Kühlringe geht eine entsprechende Staffelung mehrerer Ringdüsen oder Düsenlippen jeweils eines Kühlrings innerhalb des entsprechenden Innenkonus einher, deren Durchmesserunterschiede demnach am unteren Kühlring geringer sind als am oberen Kühlring.

Der Durchmesser der beiden Kühlgaszuführungen bzw. Kühlringe kann an eine Durchmesserveränderung der Schlauchfolie in dieser Produktionsphase in der Weise angepaßt werden, daß der untere Kühlring einen kleineren Innendurchmesser hat, als der obere Kühlring. Das Verhältnis der Eintrittsdurchmesser von oberem Kühlring zu unterem Kühlring ist bevorzugt größer als 1,1, insbesondere größer als 1,2. Jeder der beiden Kühlringe kann in bevorzugter Weise zwei Teilströme umfassen, von denen ein erster geringerer Teilstrom über dem Umfang sektorweise steuerbar und ein zweiter größerer Teilstrom über dem Umfang gleichförmig ist. Der letztgenannte größere Teilstrom kann in zwei übereinanderliegenden Ringdüsen, insbesondere hinter dem ersten Teilstrom austreten.

In bevorzugter Ergänzung kann zur sektorweise steuerbaren Kühlluft eine ebenfalls steuerbare Temperierung des Folienmaterials im Blaskopf hinzutreten, sei es durch Beheizen oder durch Kühlen, wobei die Steuerung des Kühlluftstroms beider Kühlringe und gegebenenfalls die Steuerung der Temperierung in einem gemeinsamen Regelkreis zusammengefaßt sein können.

In bevorzugter Weise kann zur Regelung des Dickenprofils durch die genannten außenliegenden Kühlringe eine über dem Umfang variable Beeinflussung der Schlauchfolie von innen hinzutreten, wobei ein innerer Kühlgasstrom ebenfalls über dem Umfang sektorweise steuerbar sein kann. Hierbei kann eine übereinstimmende gemeinsame Steuerung auf der Innenseite und auf der Außenseite verwendet werden. Auch die sektorielle Innenkühlung kann sich auf zwei Ebenen in Produktionsrichtung verteilen, die bevorzugt den Ebenen der äußeren Kühlringe zugeordnet sind.

Durch eine axiale Abstandssteuerbarkeit der Kühlgasströme bzw. Kühlringe ist eine besondere Anpassung an verschiedene Produktionsgeschwindigkeiten möglich. Im übrigen erleichtert dies das Anfahren der Produktion, indem eine Zugänglichkeit zur Foliendüse des Blaskopfes hergestellt werden kann.

Bevorzugte Ausführungsbeispiele von erfindungsgemäßen Vorrichtungen sind in den Zeichnungen dargestellt und werden nachfolgend beschrieben.

Es zeigen
- Figur 1: eine Folienblasanlage mit zwei Kühlringen, die jeweils einen steuerbaren Teilkühlring mit Regelelementen für eine sektorweise unabhängige Beeinflussung der Kühlgasströme und einen ungesteuerten Teilkühlring aufweisen;
- Figur 2: eine Folienblasanlage nach Figur 1 mit einer zusätzlichen sektorweise steuerbaren Temperierung des Folienblaskopfes;
- Figur 3: eine Folienblasanlage mit zwei Kühlringen, die jeweils einen einheitlichen Kühlring mit Steuerelementen für eine sektorweise unabhängige Beeinflussung der Kühlgasströme haben;
- Figur 4: eine Folienblasanlage nach Figur 3 mit einer zusätzlichen sektorweise steuerbaren Temperierung des Folienblaskopfes;
- Figur 5: eine Folienblasanlage mit zwei Kühlringen, die jeweils einen einheitlichen Kühlring mit Steuerelementen für eine sektorweise unabhängige Temperierung der Kühlgasströme haben;
- Figur 6: eine Folienblasanlage nach Figur 5 mit einer zusätzlichen sektorweise steuerbaren Temperierung des Folienblaskopfes;
- Figur 7: eine Folienblasanlage mit zwei Kühlringen, von denen der erste einen steuerbaren Teilkühlring mit Steuerelementen für eine sektorweise unabhängige Beeinflussung der Kühlgasströme und einen ungesteuerten Teilkühlring aufweist, und der zweite einen einheitlichen Kühlring mit Steuerelementen für eine sektorweise unabhängige Beeinflussung der Kühlgasströme hat;
- Figur 8: eine Folienblasanlage mit zwei Kühlringen, die jeweils einen steuerbaren Teilkühlring mit Steuerelementen für eine sektorweise unabhängige Beeinflussung der Kühlgasströme und einen ungesteuerten Teilkühlring umfassen, sowie mit einem zusätzlichen Innenkühlring für eine sektorweise unabhängige Beeinflussung der Kühlgasströme;
- Figur 9: den Folienblaskopf, den unteren steuerbaren Teilkühlring und den darüberliegenden unteren ungesteuerten Teilkühlring mit entsprechenden Kühlgaszuführungen nach den Figuren 1, 2 und 7 in vergrößertem Teilschnitt;
- Figur 10: die Düsenaustritte an dem unteren steuerbaren Kühlring nach Figur 9 als vergrößerte Einzelheit;
- Figur 11: ein Scheibenelement des unteren steuerbaren Kühlrings nach Figur 9 in Draufsicht;
- Figur 12: den Blaskopf mit dem unteren steuerbaren Teilkühlring, dem unteren ungesteuerten Teilkühlring und dem Innenkühlring nach Figur 8 in vergrößertem Teilschnitt;
- Figur 13: die Austrittsdüsen des unteren steuerbaren Kühlringes und des Innenkühlringes nach Figur 12 als vergrößerte Einzelheit;
- Figur 14: ein Scheibenelement des Innenkühlrings nach Figur 12 in Draufsicht.

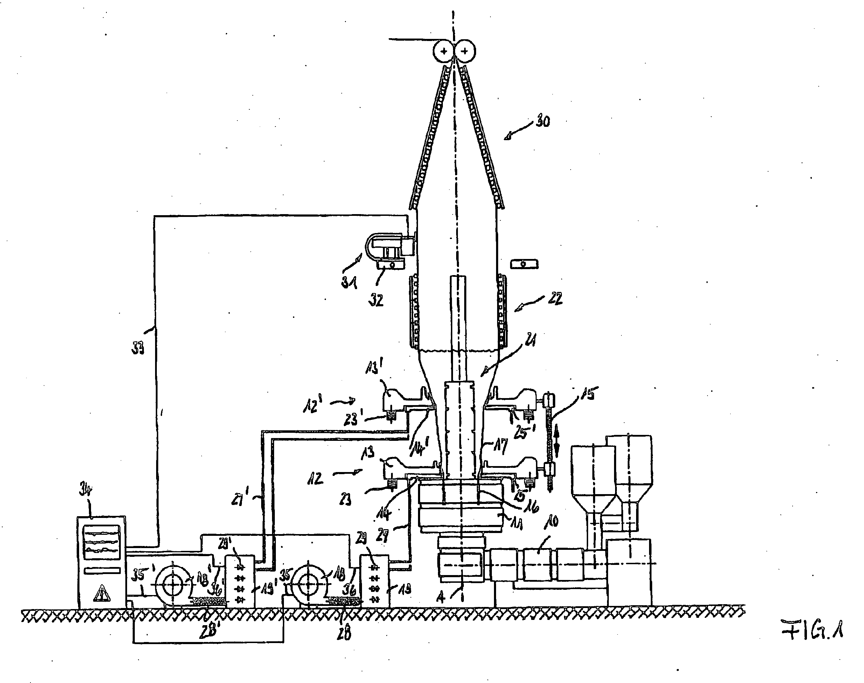

Die in Figur 1 gezeigte Vorrichtung umfaßt einen Blasfolienextruder 10 mit einem Blaskopf 11, einem ersten Kühlring 12 mit einem Ringkanal 13 für einen konstanten gleichförmig austretenden Teilkühlgasstrom und eine unterhalb desselben angeordnete Segmentscheibe 14 für einen sektorweise steuerbaren Teilkühlgasstrom sowie einen darüberliegenden zweiten Kühlring 12' mit einem Ringkanal 13' für einen konstanten gleichförmig austretenden Teilkühlgasstrom und eine unterhalb desselben angeordnete Segmentscheibe 14' für einen sektorförmig steuerbaren Teilkühlgasstrom. Beide Kühlringe 12, 12' dienen zur Kühlung eines aus einer Ringdüse 16 am Blaskopf 11 austretenden Folienschlauches 17. Zur Regelung des Dickenprofils des Folienschlauches 17 ist über dem Umfang eine Meßeinrichtung 31 vorgesehen, die die Foliendicke an dem Folienschlauch 17 oberhalb einer Einfriergrenze abtastet, und eine Regeleinrichtung 34, die die Kühlgasströme in Abhängigkeit von den über dem Umfang gemessenen Foliendicken sektorweise variiert.

Die Segmentscheiben 14, 14' sind jeweils unterhalb der Ringkanäle 13, 13' angeordnet, um den größtmöglichen Einfluß auf die Reduzierung der Foliendickentoleranzen dadurch zu nehmen, daß die jeweils heißeren Materialbereiche des Folienschlauches auf der Eintrittsseite in einen Kühlring sektorweise steuerbar gekühlt werden. Die Segmentscheiben 14, 14' sind jeweils mit einem Gebläse 18, 18' für die sektorweise steuerbaren Teilkühlgasströme verbunden, wobei für die Aufteilung des von dem Gebläse 18, 18' erzeugten Kühlgasstromes in einzelne separateTeilkühlgasströme jeweils eine Steuerungseinrichtung 19, 19' vorgesehen ist, die eine Mehrzahl von einzeln ansteuerbaren Klappen und/oder Ventilen umfaßt. Die Kühlringe 12, 12' sind mit Verstellmitteln 15 relativ zueinander axial verstellbar, wobei der untere Kühlring 12 vorzugsweise unmittelbar am Blaskopf 11 befestigt ist.

Die Steuervorrichtungen 19, 19', die von der Regeleinrichtung 34 angesteuert werden, erlauben jeweils eine sehr genaue Regelung des Dickenprofils bei der Herstellung von Blasfolien aufgrund der über einen weiten axialen Bereich sektorförmig steuerbaren Kühlgaszuführung.

Die steuerbaren Teilkühlgasströme werden jeweils in Produktionsrichtung des Folienschlauches 17 vor den gleichförmigen Teilkühlgasströmen zugeführt und direkt gegen den aus dem Blaskopf 11 austretenden Folienschlauch 17 gerichtet. Dabei werden die steuerbaren Teilkühlgasströme vor dem Eintritt in die Segmentscheiben 14, 14' einzeln durch die Steuerungsvorrichtungen 19, 19' in ihrem Volumenstrom variiert.

Der Blaskopf 11 umfaßt eine Ringdüse 16, die mit vertikaler Mittelachse A oben aus dem Blaskopf austritt. Aus der Ringdüse 16 tritt der Folienschlauch 17 aus, der mittels einer Innendruckerzeugungsvorrichtung 20 aufgeweitet und stabilisiert wird und nach oben mit einer Abzugsvorrichtung 30 abgezogen wird. Hierbei wird er von einem oberhalb der Kühlringe 12, 12' liegenden Kalibrierkorb 22 gestützt und in seinem Enddurchmesser im wesentlichen definiert. Der Folienschlauch 17 wird ringförmig umschlossen von den zwei Kühlringen 12, 12' mit den Ringkanälen 13, 13', denen jeweils ein im wesentlichen ringförmig gleichförmiger Teilkühlgasstrom entweicht, sowie unmittelbar darunter liegende Segmentscheiben 14, 14', denen sektorweise steuerbare Teilkühlgasströme entweichen. Die Kühlgasströme wirken zum einen stabilisierend auf den sich in Erweiterung befindlichen Folienschlauch 17 ein, zum anderen kühlen sie das aus der Ringdüse 16 austretende plastische Folienmaterial ab, bis in einer umlaufenden Einfrierzone die plastische Erweiterung des Schlauchmaterials infolge des Abkühlens beendet ist. Die Kühlringe 12, 12' bestehen jeweils im wesentlichen aus einem torusförmigen Ringkanal 13, 13', der jeweils einige umfangsverteilte Zufuhrstutzen 23, 23' und jeweils zumindest eine Ringdüse 24, 24' aufweist, aus der der ringförmig gleichförmige Teilkühlgasstrom möglichst gleichmäßig austritt.

Die Segmentscheiben 14, 14' bestehen jeweils aus einem einstückigen Ringsegmentkörper, der eine Mehrzahl von Zuführstutzen 25, 25' aufweist und der an seiner dem Folienschlauch 17 naheliegenden Innenseite jeweils einzelne Austrittsdüsen 26, 26' hat, aus denen einzelne sektorweise steuerbare Teilkühlgasströme austreten. Während die Zuführleitungen zu den Stutzen 23, 23' der Ringkanäle 13, 13' nicht dargestellt sind, sind beispielhaft Einzelleitungen 27, 27' zu den Zuführstutzen 25, 25' der Segmentscheiben 14, 14' dargestellt. Diese Leitungen sind jeweils mit einer der Steuerungsvorrichtungen 19, 19' verbunden, die eine der tatsächlichen Anzahl der umfangsverteilten Leitungen 27, 27' entsprechende Anzahl von Steuerventilen 29, 29' umfaßt, von denen jeweils vier stellvertretend dargestellt sind, die alle von einem der Gebläse 18, 18' über jeweils eine Versorgungsleitung 28, 28' druckluftbeaufschlagt sind. Oberhalb des Kalibrierkorbes 22 befindet sich eine berührungslose Dickenmeßeinheit 31, die auf einem koaxial zum Schlauch angeordneten Drehkranz 32 befestigt ist und die durch periodisches Umfahren des Folienschlauches 17 eine Dickenverteilungsmessung über dem Umfang vornehmen kann. Zwischen den einzelnen Messungen der Umfangsdickenverteilung kann die Meßeinrichtung 31 ortsfest gehalten werden und eine Längsdickenverlaufmessung des Folienschlauches entlang einer Mantellinie vornehmen, wobei dieser Längsdickenverlauf repräsentativ für die Längsdickenveränderung des gesamten Folienschlauches ist. Wie durch eine Signalleitung 33 symbolisiert, wird das Ergebnis der Dickenmessung in einer Regelungseinheit 34 verarbeitet, von der jeweils eine Steuerleitung 35, 35' zu den Gebläsen 18, 18' und jeweils eine Steuerleitung 36, 36' zu den Steuerungsvorrichtungen 19, 19' gehen. Mit den Steuerungsleitungen 35, 35' kann die Gebläseleistung insgesamt variiert werden; über die Steuerungsleitungen 36, 36', die stellvertretend für eine Vielzahl von Steuerungsleitungen zu den einzelnen Steuerungsventilen 29, 29' steht, kann der Öffnungsquerschnitt der üblicherweise pulsweitenmodulierten Steuerungsventile 29, 29' einzeln gesteuert werden. Die Messung der Umfangsdickenverteilung wird umgesetzt in eine Steuerung der einzelnen sektorweise regelbaren Teilkühlluftströme, wodurch das Dickenprofil auf geringstmögliche Abweichungen geregelt wird. Die Messung des Längsdickenverlaufes dient zur Feststellung der Periode der Längsdickenänderung. Diese kann durch Veränderung der Kühlgasströme als ganzes ebenfalls auf geringstmögliche Abweichungen geregelt werden.

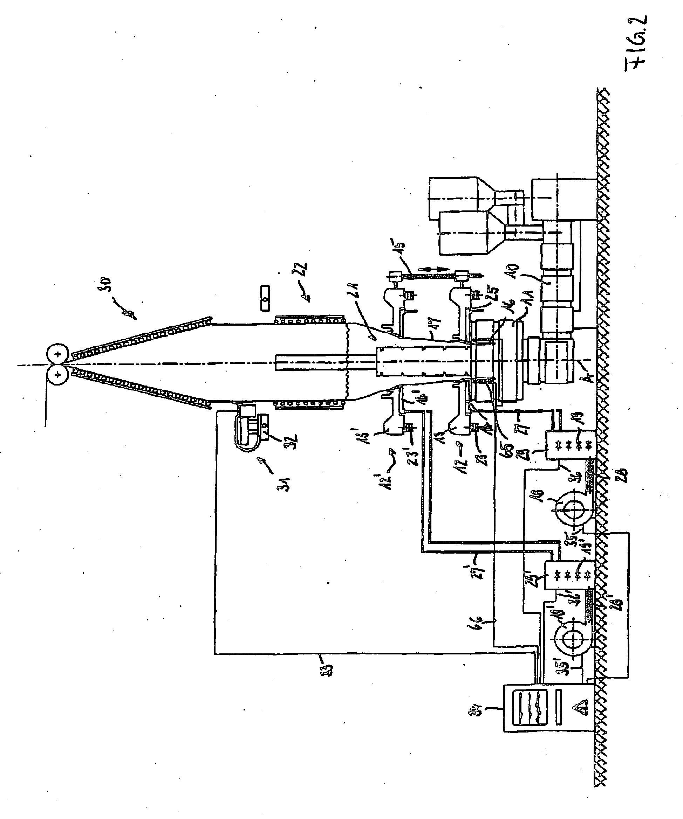

In Figur 2 ist in Ergänzung zu den Einzelheiten von Figur 1 im Blaskopf 11 eine Mehrzahl von umfangsverteilten Heizpatronen 65 oder Kühlelementen (z.B. Peltier-Elementen) vorgesehen, die über Steuerleitungen 66 von der Regeleinheit 34 ebenfalls sektorweise unabhängig gesteuert werden können. Hiermit findet eine zusätzliche variable Temperierung des Folienschlauches 17 vor dem Austritt aus der Ringdüse 16 statt.

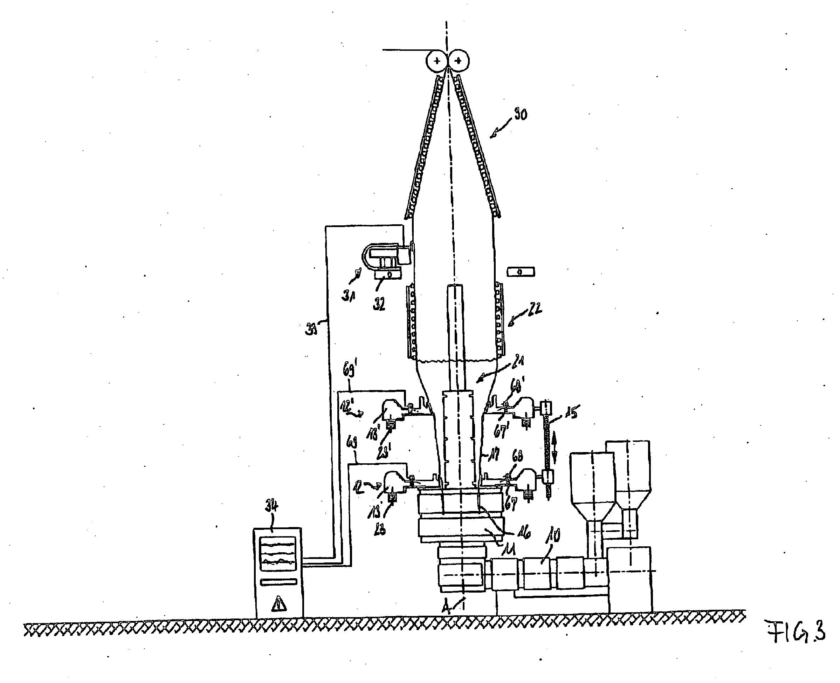

In Figur 3 umfassen die Kühlringe 12, 12' abweichend von Figur 1 keine Segmentscheiben, sondern ausschließlich einheitliche Ringkanäle 13, 13'. In diesen sind umfangsverteilte Steuerelemente 67, 67' (z.B. Klappen) mit Stellgliedem 68, 68' angeordnet, die in einzelnen Umfangsbereichen den Volumenstrom unabhängig variieren können. Die Stelleinheiten 68, 68' sind über Steuerleitungen 69, 69' ebenfalls mit der zentralen Regeleinheit 34 verbunden.

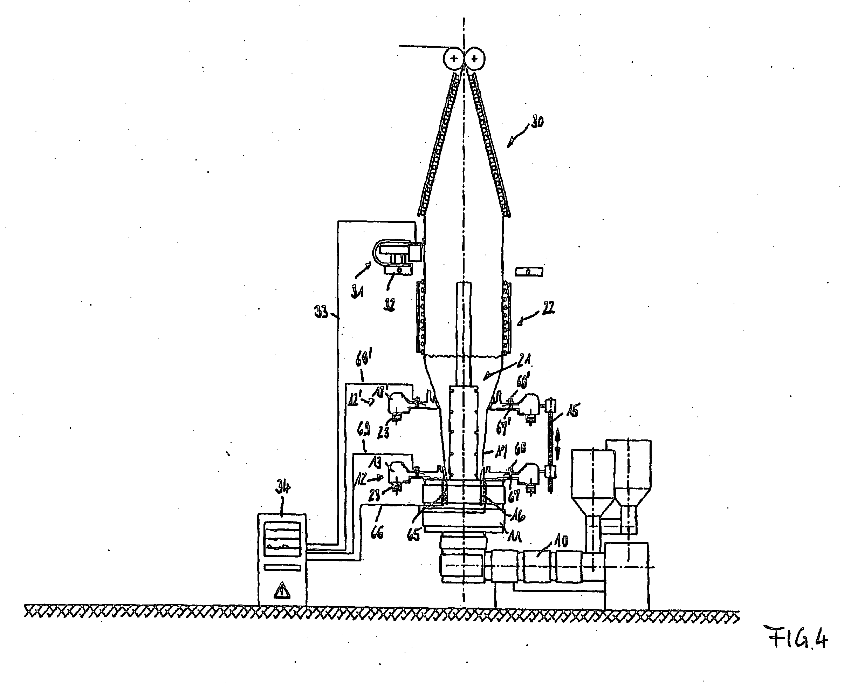

In Figur 4 ist in Ergänzung zu den Einzelheiten von Figur 1 im Blaskopf 11 eine Mehrzahl von umfangsverteilten Heizpatronen 65 oder Kühlelementen (z.B. Peltier-Elementen) vorgesehen, die über Steuerleitungen 66 von der Regeleinheit 34 ebenfalls sektorweise unabhängig gesteuert werden können. Hiermit findet eine zusätzliche variable Temperierung des Folienschlauches 17 vor dem Austritt aus der Ringdüse 16 statt.

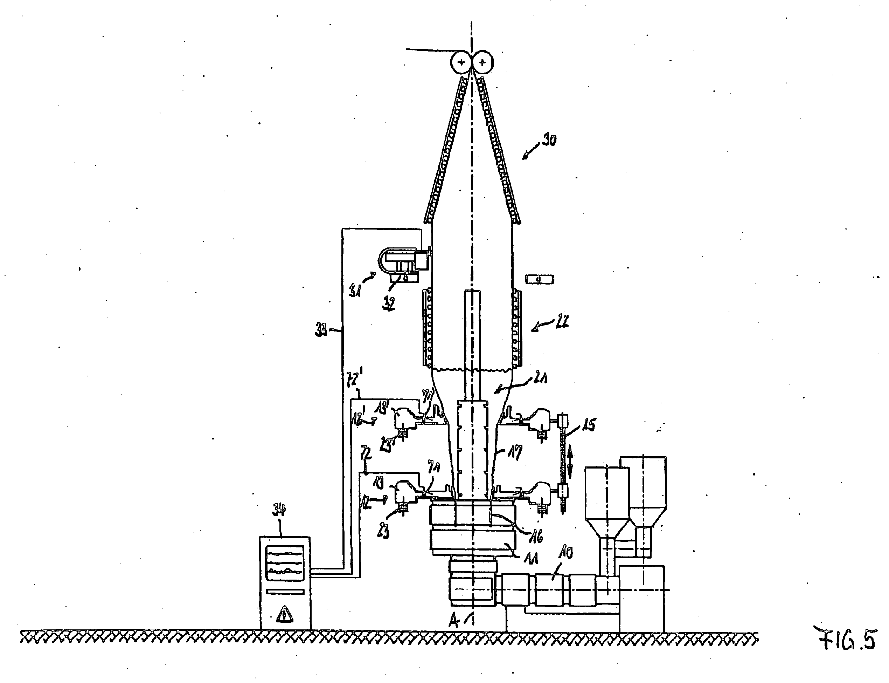

In Figur 5 umfassen die Kühlringe 12, 12' abweichend von Figur 1 keine Segmentscheiben, sondern ausschließlich einheitliche Ringkanäle 13, 13'. In diesen sind umfangsverteilte Heizpatronen 71, 71' oder Kühlelemente (z.B. Peltier-Elemente) angeordnet, die in einzelnen Umfangsbereichen den Volumenstrom unabhängig temperieren können. Die Heizpatronen 71, 71' sind über Steuerleitungen 72, 72' ebenfalls mit der zentralen Regeleinheit 34 verbunden.

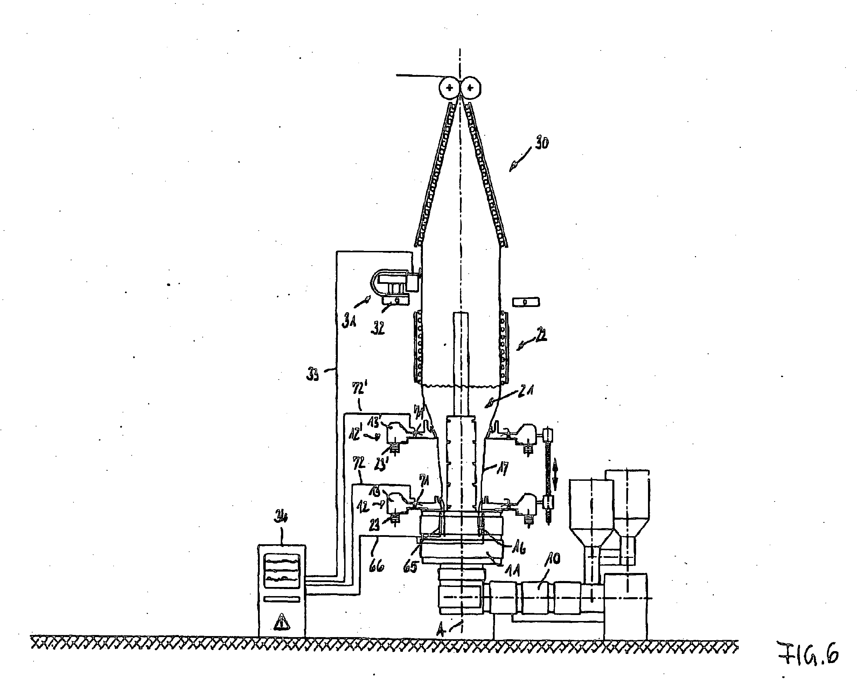

In Figur 6 ist in Ergänzung zu den Einzelheiten von Figur 6 im Blaskopf 11 eine Mehrzahl von umfangsverteilten Heizpatronen 65 oder Kühlelementen (z.B. Peltier-Elementen) vorgesehen, die über Steuerleitungen 66 von der Regeleinheit 34 ebenfalls sektorweise unabhängig gesteuert werden können. Hiermit findet eine zusätzliche variable Temperierung des Folienschlauches 17 statt.

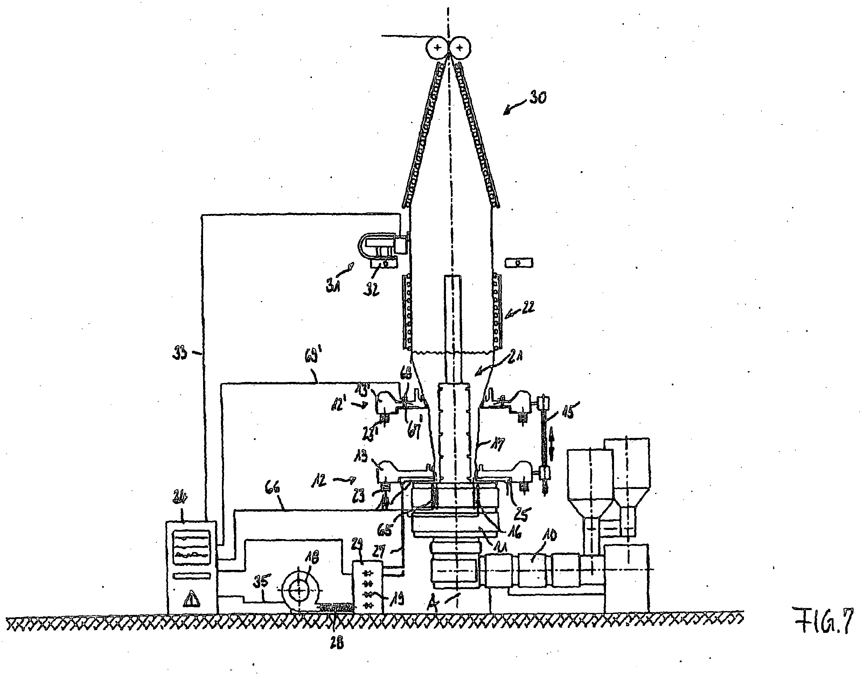

In Figur 7 ist der untere Kühlring 12 und seine Steuerung nach Art des in Figur 1 dargestellten Kühlrings ausgeführt, während der obere Kühlring 12' mit seiner Steuerung nach Art des in Figur 3 dargestellten Kühlrings 12' ausgeführt ist. Gleiche Einzelheiten sind mit gleichen Bezugsziffern belegt.

Auch hier sind im Folienblaskopf 11 umfangsverteilte Heizpatronen 65 oder Kühlelemente (z.B. Peltier-Elemente) vorgesehen, die über zusätzliche Steuerleitungen 66 über dem Umfang sektorweise steuerbar sind.

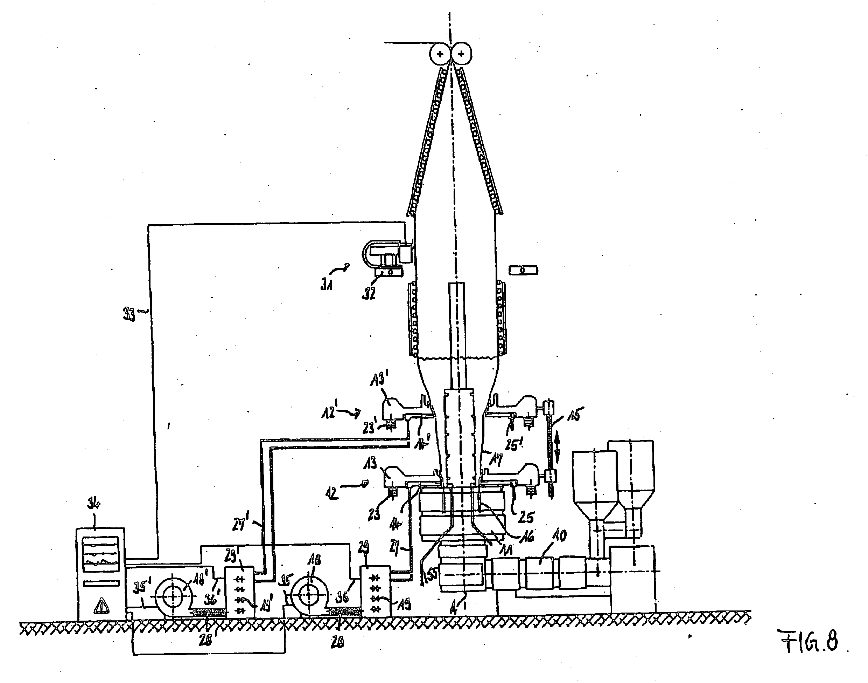

In Figur 8 ist in weitgehend übereinstimmender Darstellung mit Figur 1 eine Vorrichtung in einer ergänzten Ausführung gezeigt, bei der die gleichen Einzelheiten wie in Figur 1 mit den gleichen Bezugsziffem belegt sind. Auf die dazu gegebene Beschreibung wird insoweit Bezug genommen. Innerhalb des Folienschlauches 17 befindet sich zusätzlich eine Innenkühlvorrichtung 47, die auf den Blaskopf 11 aufgeschraubt ist und mehrere Elemente umfaßt, auf die nachstehend noch näher Bezug genommen wird. Am Umfang der Vorrichtung 47 befinden sich in verschiedenen Ebenen Ringdüsen 49, 50, die radial nach außen austreten. Diese werden über einen Innenhohlraum 51 mit Kühlgas versorgt, das über ein koaxiales zentrales Abzugsrohr 52 mit oben offenem Ende wieder abgesaugt wird. Zwischen Innenkühlvorrichtung 47 und Blaskopf 11 ist ein weiterer Zusatzkühlring 48 eingesetzt, der eine Mehrzahl von inneren Zusatzkühlgasströmen 53 über Einzeldüsen 54 erzeugt, die über einzelne Versorgungsleitungen 55 mit sektorweise steuerbarem Kühlgas versorgt werden. Die Leitungen 55 können jeweils Zweigleitungen der Einzelleitungen 27 sein, so daß bestimmte Umfangsbereiche des Folienschlauches 17 jeweils mit einheitlich gesteuertem zusätzlichen Kühlgas von innen und außen sektorweise steuerbar beaufschlagt werden.

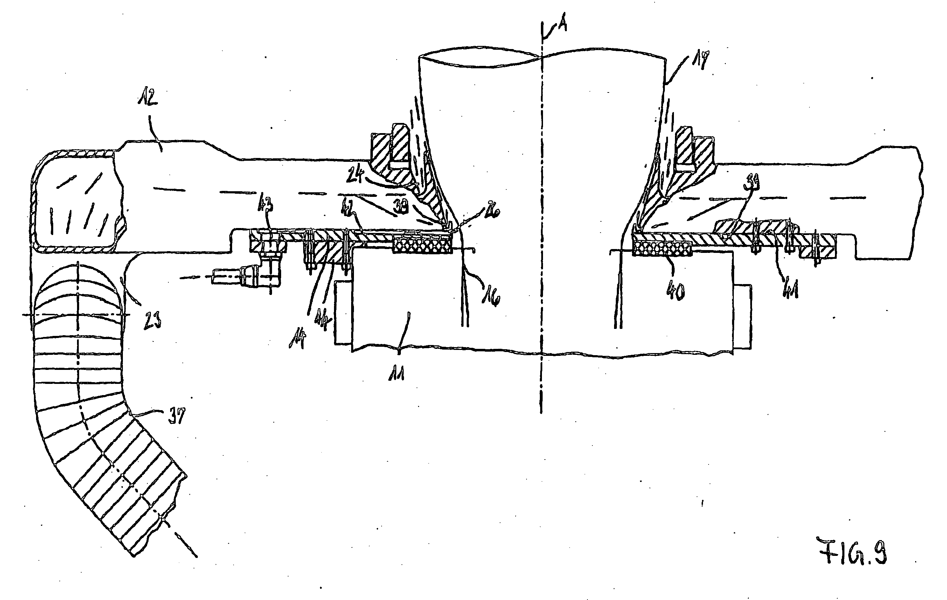

In Figur 9 ist die Ringdüse 16 und der untere Kühlring 12 in vergrößerten Teilschnitten gezeigt. Gleiche Einzelheiten sind mit gleichen Bezugsziffem belegt, wobei hier verschiedene Merkmale konstruktiv ausgeführt sind. An einen der Zufuhrstutzen 23 schließt sich eine Zufuhrleitung 37 an. Es wird deutlich, daß der untere Kühlring 12 als Ringkanal 13 ausgebildet ist, der neben einem ersten Düsenaustrittsring 24 einen weiteren Düsenaustrittsring 38 umfaßt. Der Ringkanal 13 weist eine untere plane Fläche 39 zumindest in seinem Innenbereich auf, gegen den die Segmentscheibe 14, die eine obere prinzipiell plane Fläche 41 hat, verschraubt ist. In der Segmentscheibe 14 sind einzelne Radialnuten 42 ausgeführt, die radial außen über Durchgangslöcher 43 mit den einzelnen Anschlußstutzen 25 verbunden sind, während sie radial innen in den Zusatzdüsen 26 enden. Die Radiainuten 42 bilden mit der planen Fläche 39 die einzelnen Kühlgaskanäle. Die Segmentscheibe 14 ist über Zentrierklemmen 44 gegenüber dem Blaskopf 11 zentriert. Damit ist in gleicher Weise auch der mit der Segmentscheibe 14 verschraubte Ringkanal 13 gegenüber dem Blaskopf und der Ringdüse 16 zentriert. Im Bereich der Einzeldüsen 26 liegt eine Isolierscheibe 40 zwischen Blaskopf 11 und Segmentscheibe 14. Der Aufbau des hier nicht dargestellten oberen Kühlrings ist mit Ausnahme des Durchmessers völlig gleichartig.

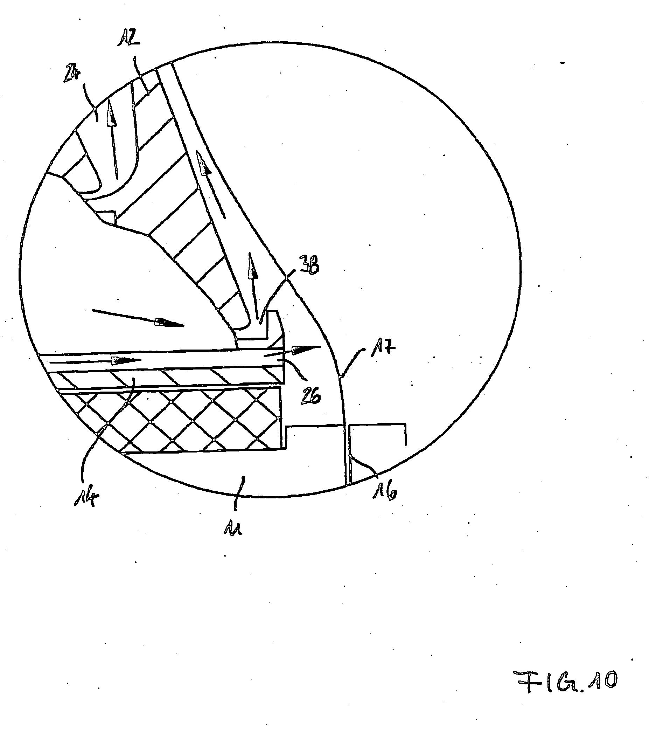

In Figur 10 ist als vergrößerte Detailzeichnung in der gleichen Darstellung wie in Figur 9 der Blaskopf 11 mit der Ringdüse 16 erkennbar, aus der der Folienschlauch 17 austritt, der hier vereinfachend mit gleichmäßiger Wandstärke dargestellt ist. Auf dem Blaskopf 11 ist die Isolierscheibe 40 sichtbar, darüber liegen der Ringkanal 13 mit den Ringdüsen 24, 38 und die darunter geschraubte Segmentscheibe 14 mit Einzeldüsen 26.

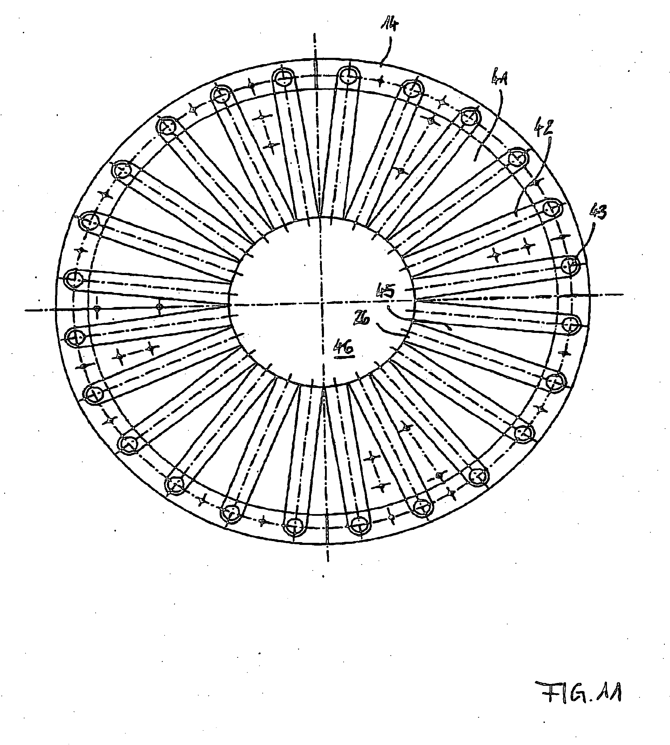

In Figur 11 ist die Segmentscheibe 14 nach Figur 9 als Einzelheit in Draufsicht gezeigt. In einer im wesentlichen planen Flanschfläche 41 sind die bereits angesprochenen Radialnuten 42 erkennbar, die außen mit Abstand von der Umfangskante enden und mit den Durchgangslöchern 43 Verbindung haben und die nach innen in den voneinander durch Zwischenstege 45 getrennten Düsenöffnungen 26 enden. In der Mitte befindet sich die zentrale Durchtrittsöffnung 46 für den Folienschlauch.

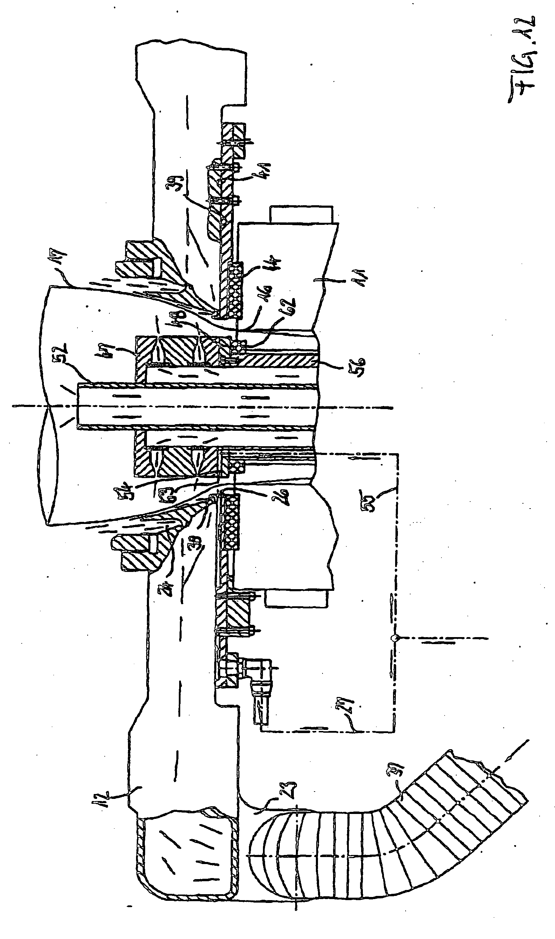

In Figur 12 ist der Blaskopf 11, der untere Kühlring 12 mit Ringkanal 13 und Segmentscheibe 14 in gleicher Weise in Figur 9 gezeigt, gleiche Einzelheiten sind mit gleichen Bezugsziffern belegt, auf die Beschreibung der Figur 9 wird insoweit Bezug genommen. Darüberhinaus ist im Inneren des Folienschlauches 17 die auf den Blaskopf 11 aufgesetzte Innenkühlvorrichtung 47 erkennbar, deren unterstes Element der innere Zusatzkühlring 48 ist, der auf ein Zylinderrohr 56 innerhalb des Blaskopfes 11 ausgeschraubt ist. Innerhalb dieses Rohres 56 sind die Zuführleitungen 55 als Bohrungen ausgeführt. Der Zusatzkühlring 54 umfaßt Durchgangsbohrungen 57 zur Verbindung mit diesen Zuführungsleitungen 55 sowie in einer planen Fläche 58 ausgeführte Radialnuten 59, deren Enden die Einzeldüsen 54 bilden. Die Innenkühlvorrichtung 47 umfaßt weiterhin mehrere aufeinander gesetzte Scheibenelemente, von denen das untere eine plane Unterseite 60 aufweist, die die Radialnuten 59 nach oben abschießt, so daß einzelne Kühlgaskanäle gebildet werden. Die einzelnen Scheibenelemente bilden miteinander die Ringdüsen 49, 50 und sind durch Gitterhülsen miteinander verbunden. Zwischen der Segmentscheibe und dem Blaskopf 11 ist ein weiterer Isolierring 62 vorgesehen.

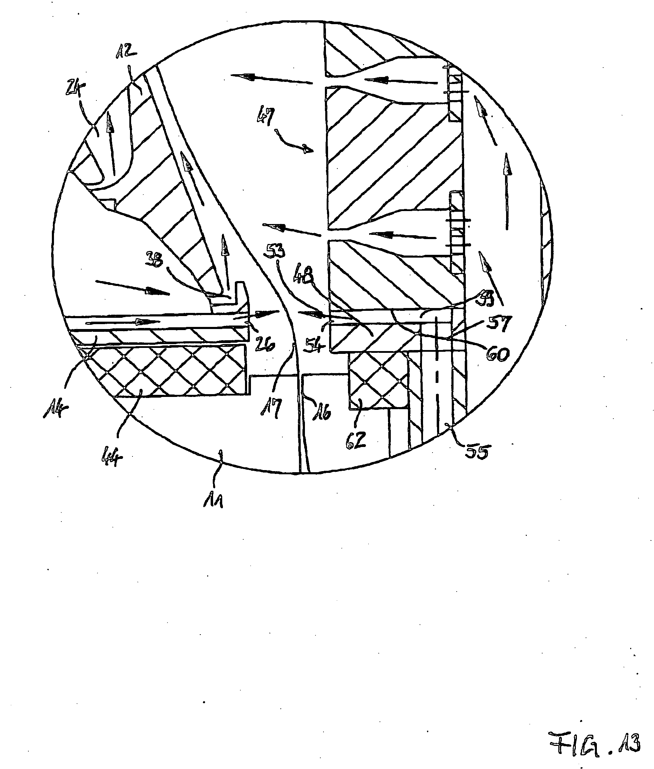

In Figur 13 sind die bereits in Figur 12 erkennbaren Einzelheiten vergrößert gezeigt, wobei insbesondere die Bildung der Zusatzkühlgasaustritte 54 durch den Zusatzkühlring 48 und das untere der Ringelemente der Innenkühlvorrichtung 47 sowie die Verbindung der Durchgangsbohrungen 57 mit den Zufuhrkanälen 55 deutlich wird.

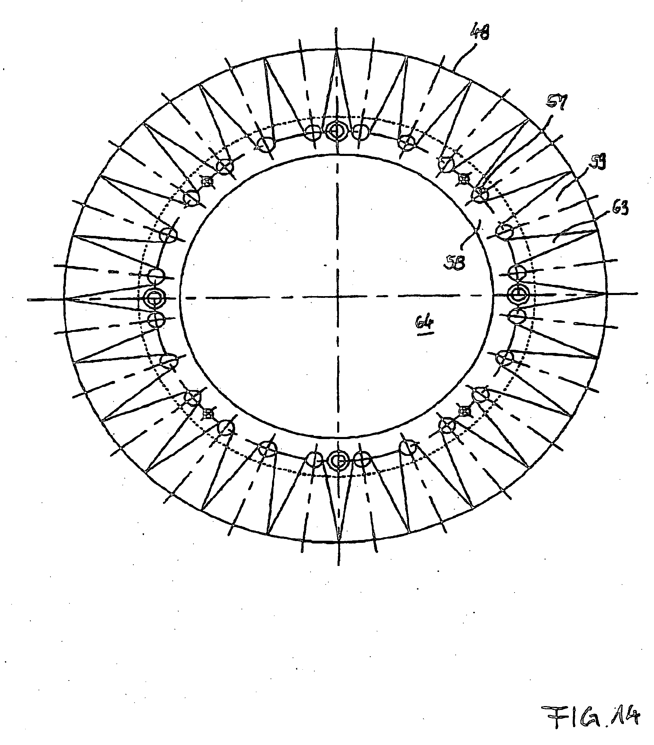

In Figur 14 ist der innere Zusatzkühlring 48 mit den bereits genannten Einzelheiten Durchgangsbohrungen 57 und Radialnuten 59 gezeigt, die in einer planen Oberfläche 58 eingefräst sind. Diese Radialnuten 59 sind zumindest bis nahe an den Außenumfang durch Trennstege 63 voneinander getrennt. Die Ringscheibe 48 hat eine Zentralöffnung 64 für die allgemeine Kühlgaszuführung.

### Bezugszeichenliste

- 10: Blasfolienextruder
- 11: Blaskopf
- 12: Kühlring
- 13: Ringkanal
- 14: Segmentscheibe
- 15: Verstellmittel
- 16: Ringdüse
- 17: Folienschlauch
- 18: Gebläse
- 19: Einrichtung zur Ventilsteuerung
- 20:
- 21: Innendruckvorrichtung
- 22: Kalibierkorb
- 23: Zuführstutzen
- 24: Ringdüse
- 25: Zuführstutzen
- 26: Einzeldüse
- 27: Zusatzkühlgasleitung
- 28: Versorgungsleitung
- 29: Steuerventil
- 30: Abzugsvorrichtung
- 31: Meßeinrichtung
- 32: Drehkranz
- 33: Signalleitung
- 34: Regeleinheit
- 35: Steuerleitung
- 36: Steuerleitung
- 37: Zufuhrleitung
- 38: Ringdüse
- 39: Planfläche
- 40: Isolierscheibe
- 41: Planfläche
- 42: Radialkanal
- 43: Durchgangsloch
- 44: Zentrierkammer
- 45: Zwischensteg
- 46: Zentralöffnung
- 47: Innenkühlvorrichtung
- 48: Zusatzkühlring
- 49: Ringdüse
- 50: Ringdüse
- 51: Zufuhrraum
- 52: Abzugsrohr
- 53: Zusatzkühlgasstrom
- 54: Einzeldüse
- 55: Zufuhrleitung
- 56: Zylinderrohr
- 57: Durchgangsbohrung
- 58: Planfläche
- 59: Radialkanal
- 60: Planfläche
- 61:
- 62: Isolierscheibe
- 63: Trennsteg
- 64: Zentralöffnung
- 65: Heizpatrone
- 66: Steuerleitung
- 67: Steuerelement
- 68: Stellglied
- 69: Steuerleitung
- 70:
- 71: Heizpatrone
- 72: Steuerleitung

## Patentansprüche

1. Verfahren zur Regelung des Dickenprofils einer Schlauchfolie aus thermoplastischem Kunststoff über deren Umfang bei der Herstellung von Schlauchfolien mittels eines Blasfolienextruders (10) mit einem Folienblaskopf (11), wobei mittels einer Meßeinrichtung die Foliendicke der Schlauchfolie über dem Umfang gemessen und mittels einer Regeleinrichtung Kühlgasströme in Abhängigkeit von den gemessenen Foliendicken über dem Umfang sektorweise variabel gesteuert werden, wobei Kühlgasströme von außen in Produktionsrichtung in zwei voneinander beabstandeten Ebenen zugeführt werden,
**dadurch gekennzeichnet,**
**daß** die Kühlgasströme in den beiden Ebenen jeweils in ihren physikalischen Parametern über dem Umfang sektorweise variabel gesteuert werden, und daß der axiale Abstand der Kühlgasströme an die Produktionsgeschwindigkeit der Schlauchfolie angepaßt wird.

2. Verfahren nach Anspruch 1,
**dadurch gekennzeichnet,**
**daß** die Kühlgasströme in Ihrem Volumenstrom sektorweise steuerbar sind.

3. Verfahren nach einem der Ansprüche 1 oder 2,
**dadurch gekennzeichnet,**
**daß** die Kühlgasströme in ihrer Temperatur sektorweise steuerbar sind.

4. Verfahren nach einem der Ansprüche 1 bis 3,
**dadurch gekennzeichnet,**
**daß** zumindest einer der beiden regelbaren Kühlgasströme aus zumindest einem über dem Umfang konstant gehaltenen Teilstrom und einem sektorweise über dem Umfang steuerbaren TeIlstrom bestehen.

5. Verfahren nach einem der Ansprüche 1 bis 4,
**dadurch gekennzeichnet,**
**daß** die Schlauchfolie zusätzlich im Bereich des Folienblaskopfes über dem Umfang sektorweise steuerbar temperiert wird.

6. Verfahren nach einem der Ansprüche 1 bis 5,
**dadurch gekennzeichnet,**
**daß** zumindest ein weiterer über dem Umfang sektorweise steuerbarer Kühlgasstrom der Schlauchfolie von innen zugeführt wird.

7. Verfahren nach einem der Ansprüche 1 bis 6,
**dadurch gekennzeichnet,**
**daß** der untere der beiden von außen zugeführten Kühlgasströme auf einem kleineren Durchmesser zugeführt wird, als der obere der beiden von außen zugeführten Kühlgasströme.

8. Verfahren nach Anspruch 4,
**dadurch gekennzeichnet,**
**daß** der über dem Umfang konstant gehaltene Teilstrom des zumindest einen Kühlgasstromes jeweils in zumindest zwei Ausblasebenen zugeführt wird.

9. Vorrichtung zur Regelung des Dickenprofils einer Schlauchfolie aus thermoplastischem Kunststoff bei der Herstellung von Schlauchfolien zur Anordnung an einem Blasfolienextruder (10) mit einem Folienblaskopf (11), umfassend eine Meßeinrichtung zur Messung des Dickenprofils der Schlauchfolie, die die Foliendicke der Schlauchfolie oberhalb einer Einfriergrenze über dem Umfang mißt, und eine Regeleinrichtung, die Kühlgasströme in Abhängigkeit von den gemessenen Foliendicken über dem Umfang sektorweise variabel steuert sowie zwei Kühlringe (12, 12'), die über dem Folienblaskopf des Blasfolienextruders in zwei voneinander beabstandeten Ebenen anzuordnen sind,
**dadurch gekennzeichnet,**
**daß** die beiden Kühlringe (12, 12') Mittel aufweisen, mit denen die Kühlgasströme über dem Umfang sektorweise variabel steuerbar sind, und
**daß** die Kühlringe (12, 12') zur Anpassung an vershiedene Produktionsgeschwindigkeiten mit Verstellmitteln (15) relativ zueinander axial verstellbar sind.
Verfahren

10. Vorrichtung nach Anspruch 9,
**dadurch gekennzeichnet,**
**daß** Mittel zum Verändern des Volumenstroms des Kühlgases in Sektoren über dem Umfang unabhängig steuerbar sind.

11. Vorrichtung nach einem der Ansprüche 9 oder 10,
**dadurch gekennzeichnet,**
**daß** unabhängig regelbare Mittel zur variablen Temperierung des Kühlgasstromes in Sektoren über dem Umfang vorgesehen sind.

12. Vorrichtung nach einem der Ansprüche 9 bis 11,
**dadurch gekennzeichnet,**
**daß** zumindest einer der Kühlringe jeweils eine über dem Umfang gleichförmige Ringdüse und eine über dem Umfang sektorweise variabel steuerbare Ringdüse umfaßt.

13. Vorrichtung nach einem der Ansprüche 9 bis 12.
**dadurch gekennzeichnet**
**daß** zusätzlich über dem Umfang verteilt einzeln steuerbare Heizpatronen und/oder einzeln steuerbare Kühlkörper im Folienblaskopf angeordnet sind.

14. Vorrichtung nach einem der Ansprüche 9 bis 13,
**dadurch gekennzeichnet,**
**daß** innerhalb der Schlauchfolie zumindest eine sektorweise über dem Umfang unabhängig steuerbare Innenblasdüse angeordnet ist, die Mittel aufweist, mit denen ein Kühlgasstrom über dem Umfang sektorweise variabel steuerbar Ist

15. Vorrichtung nach einem der Ansprüche 9 bis 14,
**dadurch gekennzeichnet,**
**daß** der untere der beiden Kühlringe einen kleineren Innendurchmesser aufweist, als der obere der beiden Kühlringe.

16. Vorrichtung nach Anspruch 12,
**dadurch gekennzeichnet,**
**daß** die über dem Umfang gleichförmige Ringdüse zumindest zwei übereinanderliegende Ausblasebenen umfaßt.

17. Vorrichtung nach einem der Ansprüche 9 bis 16,
**dadurch gekennzeichnet,**
**daß** an den Kühlringen jeweils der untenliegende Eintrittsdurchmesser für den Folienschlauch kleiner ist, als der obenliegende Austrittsdurchmesser für den Folienschlauch.

18. Vorrichtung nach Anspruch 17.
**dadurch gekennzeichnet,**
**daß** ein durch Eintrittsdurchmesser und Austrittsdurchmesser sowie deren axialen Abstand definierter Innenkonus am unteren Kühlring einen kleineren Öffnungswinkel aufweist als am oberen Kühlring.

## Claims

1. Process for controlling the thickness profile of a tubular film, made from thermoplastic plastics, around its circumference during the manufacture of tubular films by means of a blown film extruder (10) with a film extrusion die (11), wherein by means of a measuring device the film thickness of the tubular film is measured around the circumference and wherein the control device variably controls the cooling gas flows in dependency of the measured film thickness around the circumference in sectors, wherein the cooling gas flows are supplied from the outside in production direction in two planes distanced from each other,
**characterised in**
**that** the cooling gas flows in the two planes are respectively variably controlled concerning their physical parameters around the circumference in sectors, and that the axial distance of the cooling gas flows is adapted to the production velocity of the tubular film.

2. A process according to claim 1,
**characterised in**
**that** the cooling gas flows are controllable in sectors in their volume flow.

3. A process according to any one of claims 1 or 2,
**characterised in**
**that** the cooling gas flows are controllable in sectors in respect of their temperature.

4. A process according to any one of claims 1 to 3,
**characterised in**
**that** at least one of the two controllable cooling gas flows consists of at least one partial flow held so as to be constant around the circumference and of a partial flow controllable in sectors around the circumference.

5. A process according to any one of claims 1 to 4,
**characterised in**
**that**, in addition, in the region of the film extrusion die, the temperature setting for the tubular film is controlled in sectors around the circumference.

6. A process according to any one of claims 1 to 5,
**characterised in**
**that** at least one further cooling gas flow controllable in sectors around the circumference is fed into the tubular film from the inside.

7. A process according to any one of claims 1 to 6,
**characterised in**
**that** the lower one of the two cooling gas flows supplied from the outside is supplied on a smaller diameter than the upper one of the two cooling gas flows supplied from the outside.

8. A process according to claim 4,
**characterised in**
**that** the circumferentially constant partial flow of the at least one cooling gas flow is supplied into at least two blowing-out planes.

9. A device for controlling the thickness profile of a tubular film made from thermoplastic plastics during the manufacture of tubular films for arranging on a blown film extruder (10) with a film extruder die (11), comprising a measuring device for measuring the thickness profile of the tubular film, measuring the film thickness of the tubular film above a freezing limit around the circumference, and a control device, which variably controls the cooling gas flows in dependency of the measured film thicknesses around the circumference in sectors, as well as two cooling rings (12, 12'), which are to be arranged above the film extrusion die of the blown film extruder in two planes distanced to each other,
**characterised in**
**that** the two cooling rings (12, 12') have means, by which the cooling gas flows are variably controllable in sectors around the circumference, and
**that** the cooling rings (12, 12') for adapting to different production velocities are axially displaceable relative to each other by displacement means (15).

10. A device according to claim 9,
**characterised in**
**that** there are provided means for changing the volume flow of the cooling gas in sectors around the circumference which can be controlled independently.

11. A device according to any one of claims 9 or 10,
**characterised in**
**that** there are provided independently controllable means for variably setting the temperature of the cooling gas flow in sectors around the circumference.

12. A device according to any one of claims 9 to 11,
**characterised in**
**that** at least one of the cooling rings comprises a circumferentially uniform annular nozzle and an annular nozzle which, circumferentially, is variably controllable in sectors.

13. A device according to any one of claims 9 to 12,
**characterised in**
**that**, in addition, the film extrusion die comprises circumferentially distributed, individually controllable heating cartridges and/or individually controllable cooling members.

14. A device according to any one of claims 9 to 13,
**characterised in**
**that** inside the tubular film, there is arranged at least one inner blowing nozzle which is independently controllable in sectors around the circumference and which comprises means with the help of which a cooling gas flow is variably controllable in sectors around the circumference.

15. A device according to any one of claims 9 to 14,
**characterised in**
**that** the lower one of the two cooling rings comprises a smaller inner diameter than the upper one of the two cooling rings.

16. A device according to claim 12,
**characterised in**
**that** the circumferentially uniform annular nozzle comprises at least two blowing-out planes arranged one above the other.

17. A device according to any one of claims 9 to 16,
**characterised in**
**that**, at the cooling rings, the lower entry diameter for the tubular film is smaller than the upper exit diameter for the tubular film.

18. A device according to claim 17,
**characterised in**
**that** an inner cone defined by the entry diameter and the exit diameter as well as the distance between same comprises a smaller opening angle at the lower cooling ring than at the upper cooling ring.

## Revendications

1. Procédé destiné à réguler le profil d'épaisseur d'un film tubulaire en une matière thermoplastique le long de sa circonférence, lors de la fabrication de films tubulaires au moyen d'une extrudeuse de film de soufflage (10) comprenant une tête de soufflage de film (11), l'épaisseur de film du film tubulaire étant mesurée le long de sa circonférence au moyen d'un dispositif de mesure et des écoulements de gaz de refroidissement étant commandés au moyen d'un dispositif de régulation, de manière variable par secteurs le long de la circonférence, en fonction des épaisseurs de film mesurées, des écoulements de gaz de refroidissement étant amenés de l'extérieur, dans la direction de production, dans deux plans espacés l'un de l'autre, **caractérisé en ce que** les écoulements de gaz de refroidissement dans les deux plans sont respectivement commandés de manière à faire varier leurs paramètres physiques par secteurs le long de la circonférence et **en ce que** l'espacement axial des écoulements de gaz de refroidissement est adapté à la vitesse de production du film tubulaire.

2. Procédé selon la revendication 1, **caractérisé en ce que** les écoulements de gaz de refroidissement peuvent être commandés par secteurs, quant à leur débit volumique.

3. Procédé selon l'une des revendications 1 ou 2, **caractérisé en ce que** les écoulements de gaz de refroidissement peuvent être commandés par secteurs, quant à leur température.

4. Procédé selon l'une des revendications 1 à 3, **caractérisé en ce que** l'un au moins des deux écoulements de gaz de refroidissement pouvant être régulés, est constitué d'au moins un écoulement partiel maintenu constant le long de la circonférence, et d'un écoulement partiel pouvant être commandé par secteurs le long de la circonférence.

5. Procédé selon l'une des revendications 1 à 4, **caractérisé en ce que** le film tubulaire est en supplément tempéré dans la zone de la tête de soufflage de film, d'une manière commandée par secteurs le long de la circonférence.

6. Procédé selon l'une des revendications 1 à 5, **caractérisé en ce qu**'au moins un autre écoulement de gaz de refroidissement pouvant être commandé par secteurs le long de la circonférence est amené au film tubulaire par l'intérieur.

7. Procédé selon l'une des revendications 1 à 6, **caractérisé en ce que** l'écoulement inférieur des deux écoulements de gaz de refroidissement amenés de l'extérieur est amené sur un diamètre plus petit que l'écoulement supérieur des deux écoulements de gaz de refroidissement amenés de l'extérieur.

8. Procédé selon la revendication 4, **caractérisé en ce que** l'écoulement partiel dudit au moins un écoulement de gaz de refroidissement, qui est maintenu constant le long de la circonférence, est amené respectivement dans au moins deux plans de soufflage.

9. Dispositif destiné à réguler le profil d'épaisseur d'un film tubulaire en une matière thermoplastique, lors de la fabrication de films tubulaires, prévu pour être agencé sur une extrudeuse de film de soufflage (10) avec une tête de soufflage de film (11), l'ensemble comprenant un dispositif de mesure pour mesurer le profil d'épaisseur du film tubulaire, qui mesure l'épaisseur de film du film tubulaire le long de la circonférence, au-dessus d'une limite de solidification et un dispositif de régulation qui commande de manière variable par secteurs le long de la circonférence des écoulements de gaz de refroidissement en fonction des épaisseurs de film mesurées, ainsi que deux anneaux de refroidissement (12, 12') qui sont à agencer au-dessus de la tête de soufflage de film de l'extrudeuse de film de soufflage, dans deux plans espacés l'un de l'autre, **caractérisé en ce que** les deux anneaux de refroidissement (12, 12') présentent des moyens à l'aide desquels les écoulements de gaz de refroidissement peuvent être commandés de façon à être variables par secteurs le long de la circonférence et que les anneaux de refroidissement (12, 12') sont réglables axialement l'un par rapport à l'autre à l'aide de moyens de réglage (15) pour adaptation à différentes vitesses de production.

10. Dispositif selon la revendication 9, **caractérisé en ce que** des moyens pour faire varier le débit volumique du gaz de refroidissement par secteurs le long de la circonférence, peuvent être commandés indépendamment.

11. Dispositif selon l'une des revendications 9 ou 10, **caractérisé en ce que** des moyens pouvant être régulés indépendamment sont prévus pour tempérer de manière variable l'écoulement de gaz de refroidissement, par secteurs le long de la circonférence.

12. Dispositif selon l'une des revendications 9 à 11, **caractérisé en ce que** l'un au moins des anneaux de refroidissement comprend respectivement une buse annulaire uniforme le long de la circonférence, et une buse annulaire pouvant être commandée de manière variable par secteurs le long de la circonférence.

13. Dispositif selon l'une des revendications 9 à 12, **caractérisé en ce qu'**en supplément des cartouches chauffantes pouvant être commandées individuellement et/ou des corps de refroidissement pouvant être commandés individuellement, sont agencés de manière répartie sur la circonférence, dans la tête de soufflage de film.

14. Dispositif selon l'une des revendications 9 à 13, **caractérisé en ce qu**'à l'intérieur du film tubulaire est agencée au moins une buse de soufflage intérieure pouvant être commandée indépendamment par secteurs le long de la circonférence, et qui comporte des moyens à l'aide desquels un écoulement de gaz de refroidissement peut être commandé de manière variable par secteurs le long de la circonférence.

15. Dispositif selon l'une des revendications 9 à 14, **caractérisé en ce que** celui inférieur des deux anneaux de refroidissement présente un diamètre intérieur plus petit que celui supérieur des deux anneaux de refroidissement.

16. Dispositif selon la revendication 12, **caractérisé en ce que** la buse annulaire uniforme le long de la circonférence englobe au moins deux plans de soufflage superposés.

17. Dispositif selon l'une des revendications 9 à 16, **caractérisé en ce que** sur chacun des anneaux de refroidissement le diamètre d'entrée pour le film tubulaire, situé dans le bas, est plus petit que le diamètre de sortie pour le film tubulaire, situé dans la haut.

18. Dispositif selon la revendication 17, **caractérisé en ce qu'**un cône intérieur défini par le diamètre d'entrée et le diamètre de sortie ainsi que par leur distance axiale d'espacement réciproque, présente un angle d'ouverture plus petit au niveau de l'anneau de refroidissement inférieur qu'au niveau de l'anneau de refroidissement supérieur.
